# EUROPEAN PATENT APPLICATION

(11) **EP 1 371 889 A2**
(43) Date of publication of application: **17.12.2003**
(21) Application number: 03013059.5
(22) Date of filing: 10.06.2003
(51) Int. Cl.: F16K 31/42, F16K 31/40

(54) **Three-way switching valve**

(30) Priority: 13.06.2002 JP 2002172823
(71) Applicant: TGK Co., Ltd., Hachioji-shi, Tokyo 193-0942 (JP)
(72) Inventor: Koyama, Katsumi, Hachioji-shi, Tokyo (JP)
(74) Representative: Grünecker, Kinkeldey, Stockmair & Schwanhäusser Anwaltssozietät

(57) **Abstract**

A compact pilot-operated three-way switching valve changes a flow of a fluid introduced into an inlet port T1 such that the fluid is caused to flow into a first outlet port T2 or a second outlet port T3. Pressures in pressure-regulating chambers above pistons 8, 9 are selectively guided into a passage 36 by a pilot valve having a pilot valve element 18, plugs 15, 17 including respective valve seats 14, 16, and a spring 19. The passage 36 leads one of the pressures to the first outlet port T2 or the second outlet port T3 via a check valve having valve seats 32, 33, and a valve element 35. The check valve causes a very small amount of fluid permitted to flow so as to keep main valves open and closed, respectively, to flow to the downstream side of an open one of the main valves, whereby internal leakage of fluid is prevented.

## Description

This invention relates to a three-way switching valve, according to the preamble part of claim 1, particularly to a pilot-operated three-way switching valve for switching a flow path of a fluid by electromagnetic operation.

In a known three-way switching valve the alternating opening and closing valve operations are carried out by actuating valve elements by a solenoid or a motor, or by using the difference between fluid pressures. Some known solenoid-operated three-way switching valves have two solenoids for actuating two valve elements alternately. Other known types use pressure differences between pressures on the discharge side and the suction side of a pump for a valve element or a portion for actuating the valve element, and other conventional three-way switching valves generate the differential pressure by connecting a capillary tube to the suction side of a pump.

A three-way switching valve known e.g. from JP-A-4-312276, has one solenoid only, and no external tube, so as to make the valve mechanism compact in size. The solenoid and two valve elements arranged on the same axis and use a diaphragm pilot mechanism. When the solenoid is deenergized, a pilot valve element closes a pilot valve hole by spring force, whereby a valve element on the solenoid side is closed, and a valve element on an opposite side of the solenoid is opened. Inversely, when the solenoid is energized, the pilot valve element is opened whereby a pressure in a diaphragm chamber is relieved to the downstream side of the valve to be opened, to thereby open the valve element on the solenoid side and at the same time close the valve element on the opposite side of the solenoid by the supplied fluid pressure. This known three-way switching valve performs with insufficient durability when used for very high fluid pressure, since the diaphragm is employed in the pilot mechanism. To open and close the two valve elements in an interlocked fashion, a drive shaft extends through a partition wall that separates two outlet passages. This causes leakage through a portion slidably holding the drive shaft.

It is an object of the present invention to provide a pilot-operated three-way switching valve having a valve mechanism compact in size, being capable of handling high-pressure fluid, and being free from internal fluid leakage.

To achieve the above object, the present invention provides a pilot-operated three-way switching valve according to claim 1.

The check valve on the downstream side of the pilot valve, used for selectively relieving pressure in the pressure-regulating chambers for the pistons to a low-pressure side, is caused to communicate with the downstream side of an open one of the main valves. Due to this configuration, a very small amount of a fluid permitted to flow to keep the main valves open and closed, respectively, is caused to flow to the downstream side of the open one of the main valves via the pilot valve and the check valve, which prevents internal leakage of the fluid within the three-way switching valve. The pressure-regulating chamber above the piston of the open main valve has a secondary pressure lower than a primary pressure by the amount of a pressure loss caused by the flow of the fluid through the main valve, and hence the differential pressure of the fluid causes the main valve to maintain its opening operation. Further, since only a small differential pressure between the primary pressure and the secondary pressure is applied to the pilot valve, only a very small solenoid force is required for actuating the pilot valve element. This makes it possible to make the solenoid compact in size.

Embodiments of the present invention will be described with reference to the drawings. In the drawings is:
- Fig. 1: two interrelated cross-sections of a first embodiment of a solenoid actuated three-way switching valve, with the solenoid OFF,
- Fig. 2: tow interrelated cross-sections of the three-way switching valve of Fig. 1 with the solenoid ON,
- Fig. 3: a time chart showing operating conditions of the three-way switching valve of Figs 1 and 2,
- Fig. 4: cross-section of a second embodiment of a three-way switching valve,
- Fig. 5: two cross-sections taken along lines B-B and C-C of Fig. 4,
- Fig. 6: two interrelated cross-sections of a third embodiment of a three-way switching valve,
- Fig. 7: two interrelated cross-sections of a fourth embodiment of a three-way switching valve.

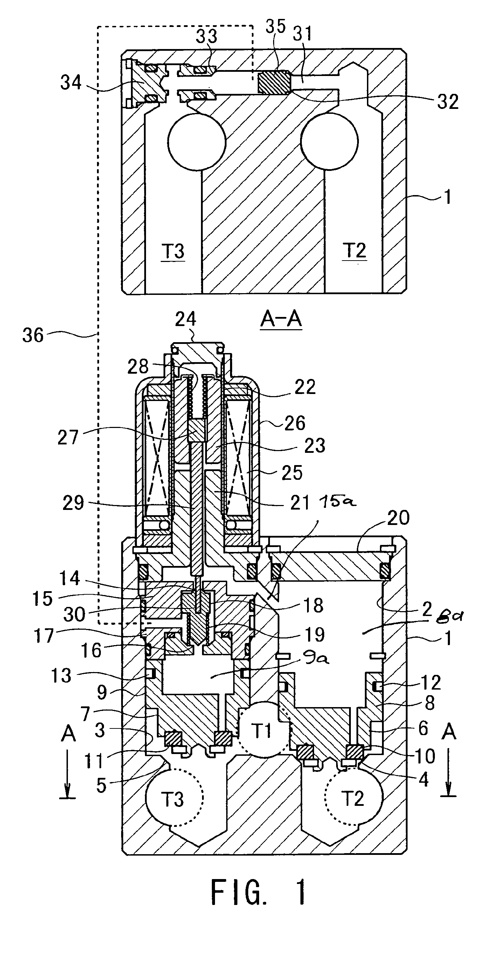

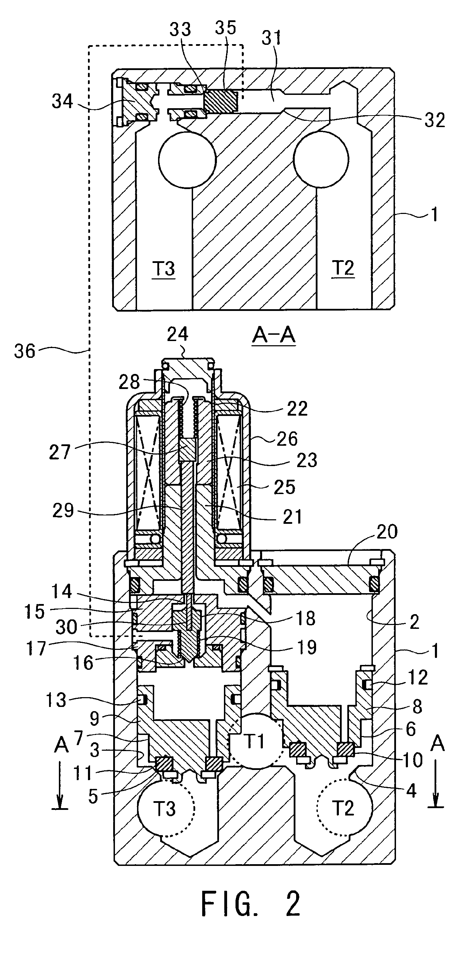

The three-way switching valve of Figs 1 and 2 has a body 1 having two cylinder bores 2, 3 accommodating two parallel main valves. The body 1 has a central inlet port T1 communicating with both cylinder bores 2, 3. First and second outlet ports T2, T3 are formed at respective locations downward in the cylinder bores 2, 3.

The cylinder bores 2, 3 contain integrally formed main valve seats 4, 5 between the inlet port T1 and the first and second outlet ports T2, T3. Main valve elements 6, 7 can move from the inlet port T1 side to and away from the main valve seats 4, 5. The main valve elements 6, 7 are integrally formed with pistons 8, 9 slidably arranged in the cylinder bores 2, 3, respectively. The pistons 8, 9 have larger pressure-receiving areas the main valve elements 6, 7. A pressure regulating chamber 8a, 9a is provided in the bores 2, 3 above each piston.

The main valve elements 6, 7 carry seal rings 10, 11, e.g. secured by crimping and washers. The pistons 8, 9 carry combinations of tension rings and piston rings 12, 13 in peripheral grooves. This allows only a very small amount of fluid to flow from the inlet port T1 into each of the pressure-regulating chambers 8, 9 above the pistons 8, 9, past the piston rings 12, 13. The upward movement of the piston 8 in the cylinder bore 2 is limited by a C shaped snap ring fitted into the wall of the cylinder bore 2.

Above the piston 9 a three-way valve is arranged comprising a plug 15 including a valve seat 14 whose valve hole communicates via a passage 15a with the pressure-regulating chamber 8a above the right-side piston 8, a plug 17 including a valve seat 16 whose valve hole communicates with the pressure-regulating chamber 9a, a needle-shaped pilot valve element 18 both ends of which are opposed to the valve seats 14, 16 such that the both ends can open and close the valve holes of the valve seats 14, 16, and a spring 19 urging the pilot valve element 18 in a direction towards the valve seat 14.

The cylinder bore 2 is closed by a cap 20. In the upper opening of the cylinder bore 3 a solenoid is provided for actuating the pilot valve. The solenoid has a core 21 integrally formed with the body 1 such that the core 21 also serves as a lid for closing the upper opening of the bore 3. The core 21 has an upper half thereof fitted in a sleeve 22. The sleeve 22 contains a plunger 23, and isclosed by a cap 24. A solenoid coil 25 is arranged on the outer periphery of the sleeve 22 and surrounded by a yoke 26.

The core 21 and the plunger 23 are formed with an axial and central through hole. The through hole in the plunger 23 has a stepped portion at an intermediate part thereof such that an upper part of the through hole has a larger diameter than the lower part. The larger diameter part accommodates a holder 27 and a spring 28 for urging the holder 27 in a direction to abut at the stepped portion. A shaft 29 is disposed in the lower smaller diameter part of the through hole in the plunger 23 and the through hole in the core 21. The shaft 29 upper end is brought into abutment with the holder 27. The shaft 29 lower end is brought into abutment with a shaft 30 extending through the valve hole of the valve seat 14. The shaft 30 is rigidly fixed to the pilot valve element 18.

A space containing the pilot valve element 18 communicates with a check valve shown in the upper cross-section of the body 1. The check valve includes a passage 31 extending between the first and the second outlet ports T2, T3. A valve seat 32 is integrally formed with the body 1 on the first outlet port side of the passage 31. On the second outlet port side of the passage 31 is arranged a plug 34 that forms a valve seat 33. A space in the passage 31 between the valve seat 32 and valve seat 33 communicates via a passage 36 indicated by a dotted line with the space containing the pilot valve element 18. A valve element 35 is arranged such that it can be seated on either of the valve seats 32, 33.

When the solenoid coil 25 is deenergized (solenoid OFF), with no fluid introduced into the inlet port T1, the pilot valve element 18 is pushed upward by the spring 19 in Figs. 1 and 2, and is seated on the valve seat 14. An upper portion of the pilot valve is closed, and a lower portion is opened. The pressure-regulating chamber 8a is closed by the pilot valve, while the pressure-regulating chamber 9a communicates with the check valve via the pilot valve and the passage 36. Although the main valve elements 6, 7 and the pistons 8, 9 may assume arbitrary positions, it is assumed that the main valve elements 6, 7 are seated on the main valve seats 4, 5, respectively, e.g. due to their own weight. Further, the valve element 35 of the check valve is in a position taken when previously the supply of the fluid was stopped.

When fluid is introduced into the inlet port T1 (solenoid still OFF), the pressure rises in the pressure-regulating chambers 8a, 9a. The pressure-regulating chamber 8a remains closed by the pilot valve, while the pressure-regulating chamber 9a communicates with the first and second outlet ports T2, T3 via the pilot valve and the check valve. The pressure in the pressure-regulating chamber 8a becomes high, whereas the pressure in the pressure-regulating chamber 9a becomes low since more fluid flows out to the first or second outlet port T2, T3 than fluid flows in from the inlet port T1. The piston 8 has a larger pressure-receiving area than the main valve element 6. The piston 8 and the main valve element 6 both are pushed downward by the difference between pressures applied to the piston 8 and the main valve element 6 the state in Fig. 1. Further, since the pressure on the side of the main valve element 7 is high and the pressure within the pressure-regulating chamber 9a is low, the piston 9 and the main valve element 7 are pushed upward, and (Fig. 1) the main valve in the cylinder bore 3 is opened. As a result, in the check valve, the pressure in the first outlet port T2 becomes low, and the pressure in the second outlet port T3 becomes high, so that the valve element 35 of the check valve is seated on the right-side valve seat 32 on the low-pressure side, to block communication between the first and second outlet ports T2, T3. Thus, the check valve is brought to the state illustrated in Fig. 1.

Next, when the solenoid is turned ON, first, the plunger 23 is pulled and attracted by the core 21, the holder 27 is pushed down toward the stepped portion in the plunger 23 by the urging force of the spring 28. The holder 27 pushes the shaft 29 and the shaft 30 rigidly fixed to the pilot valve element 18 downward. Consequently, the pilot valve element 18 is pushed downward against the force of the spring 19 and is seated on the lower valve seat 16. Thereafter, the pilot valve element 18 is held in the state seated on the lower valve seat 16, by the urging force of the spring 28 within the plunger 23. The upper portion of the pilot valve opens, and the lower portion closes. The pressure-regulating chamber 8a communicates via the pilot valve, the passage 36, and the check valve with the second outlet port T3. The fluid flow from the inlet port T1 to the second outlet port T3 causes a pressure loss. The pressure in the second outlet port T3 becomes lower than the pressure at the inlet port T1, and reduces the pressure in the pressure-regulating chamber 8a to the pressure at the second outlet port T3. The pressure in the pressure-regulating chamber 9a cannot be relieved, but is increased to push the piston 9 downward. This closes the left-side main valve element 7 to reduce the pressure in the second outlet port T3 so that the pressure within the pressure-regulating chamber 8a is now sharply reduced. This causes the right-side piston 8 to move upward by the difference between the pressure in the pressure-regulating chamber 8a and the pressure at the inlet port T1, whereby the right-side main valve element 6 is opened. Simultaneously, since the pressure in the first outlet port T2 becomes high, and the pressure in the second outlet port T3 becomes low, the valve element 35 of the check valve is seated on the left-side valve seat 33 on the low-pressure side, and a route is cleared for relieving the pressure from the pressure-regulating chamber 8a to the first outlet port T2 on a side where the check valve is opened. As a result, the three-way switching valve is brought to the state illustrated in Fig. 2.

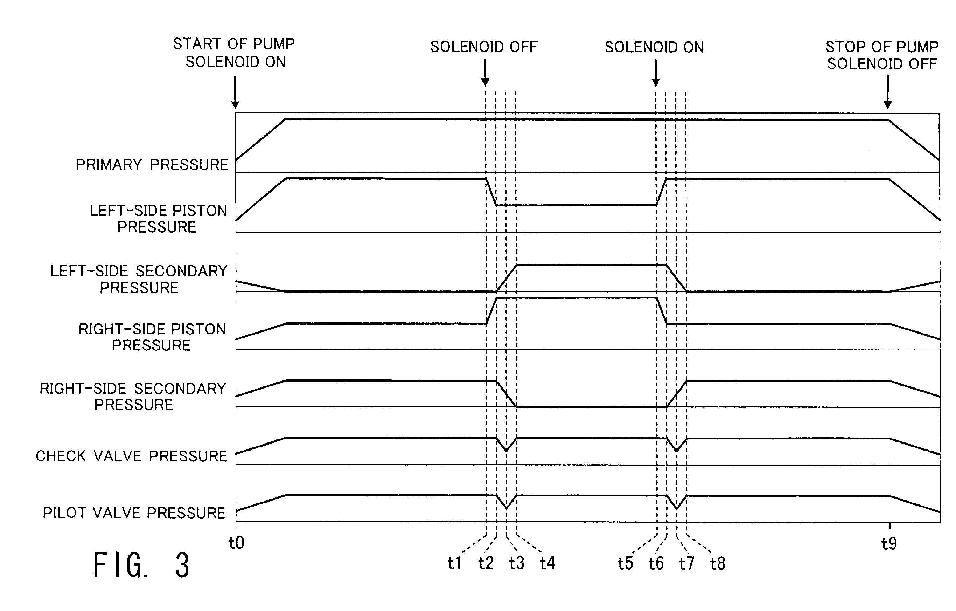

For a better understanding of Fig. 3, it is assumed here that in a closed fluid circuit, the inlet port T1 is connected to the discharge side of a pump, while the first and second outlet ports T2, T3 are connected to the suction side of the pump. In FIG. 3, the pressure of a fluid introduced into the inlet port T1 is represented by a primary pressure, the pressure in the pressure-regulating chamber 9a is represented by a left-side piston pressure, the pressure in the second outlet port T3 on the downstream side of the left-side main valve is represented by a left-side secondary pressure, the pressure in the pressure-regulating chamber 8a is represented by a right-side piston pressure, the pressure in the first outlet port T2 on the downstream side of the right-side main valve is represented by a right-side secondary pressure, the pressure in the central chamber accommodating the valve element 35 within the check valve is represented by a check valve pressure, and the pressure in a central chamber accommodating the pilot valve element 18 is represented by a pilot valve pressure. The ordinate of the diagram represents pressure changes, and the abscissa represents time.

First, let it be assumed that at a time t0, the pump is started, and the solenoid is turned ON. The primary pressure increases. The pressure-regulating chamber 9a is closed by the pilot valve actuated by the solenoid, and the left-side piston pressure as well is increased similarly. Both of the primary pressure and the left-side piston pressure become stable at their highest pressure levels.

If during the pressure increase the second outlet port T3 on the closed chamber side is under suction by the pump, the left-side secondary pressure has its residual pressure decreased. Further, the right-side piston pressure, the right-side secondary pressure, the check valve pressure, and the pilot valve pressure are each increased to a level obtained by subtracting a pressure loss caused by flow of the fluid passing through the right-side main valve from the primary pressure.

When the solenoid is turned OFF at time t1, although the primary pressure is not changed, the pressure-regulating chamber 9a communicates with the second outlet port T3, whereby the left-side piston pressure attempts to be equal to the secondary pressure of the second outlet port T3, and hence is decreased. At the same time, since the pressure-regulating chamber 8a is closed by the pilot valve, the right-side piston pressure is increased attempting to become equal to the primary pressure.

At time t2, when the left-side piston pressure becomes equal to the secondary pressure of the second outlet port T3, and the right-side piston pressure becomes equal to the primary pressure, the right-side main valve is closed, and the left-side main valve is opened. This inverts the secondary pressure of the first outlet port T2 and the secondary pressure of the second outlet port T3, and hence the valve element 35 of the check valve is moved from left to right. At this time, since the first outlet port T2 and the second outlet port T3 temporarily communicate via the passage 31 accommodating the valve element 35, the check valve pressure and the pilot valve pressure are reduced (time t3) during switching operation of the check valve, and return to the secondary pressure of the open left-side main valve again (time t4). During switching operation of the check valve (t2 to t4), the left-side secondary pressure is increased to the pressure obtained by subtracting the pressure loss from the primary pressure, and the right-side secondary pressure is reduced to the suction pressure of the pump.

At a time t5, when the solenoid is turned ON again, first, the left-side piston pressure is increased to the primary pressure, and the right-side piston pressure is reduced to the secondary pressure of the right-side main valve. Now, when the right-side main valve is opened, and the left-side main valve is closed, during a time period t6 to t8 over which switching operation of the check valve is carried out, the left-side secondary pressure is reduced to the suction pressure of the pump, and the right-side secondary pressure is increased to the level obtained by subtracting the pressure loss from the primary pressure. The check valve pressure and the pilot valve pressure are temporarily reduced, respectively.

At a time t9, when the pump is stopped, and the solenoid is turned OFF, the primary pressure, the left-side piston pressure, the right-side piston pressure, the right-side secondary pressure, the check valve pressure, and the pilot valve pressure are reduced, and the left-side secondary pressure is increased, whereby all the pressures become equal to each other.

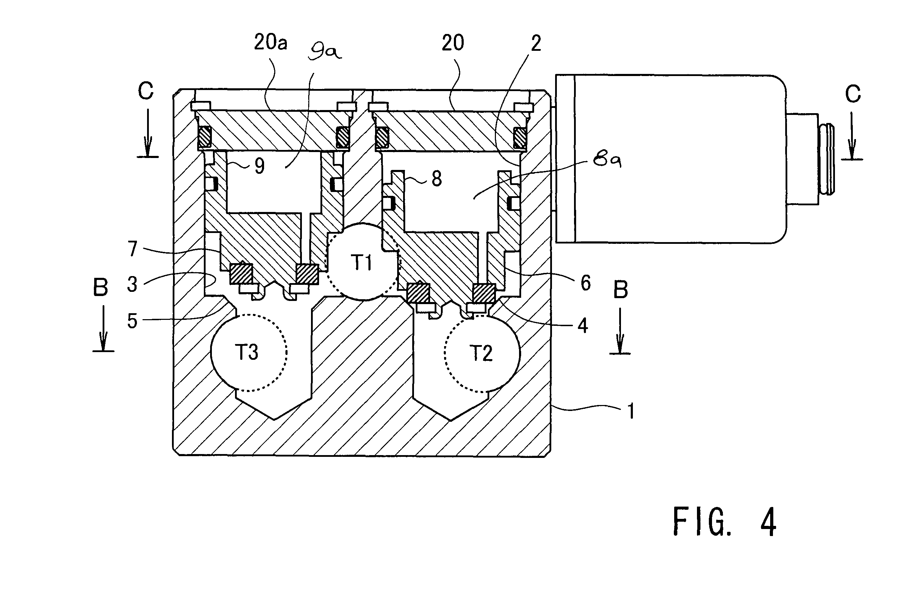

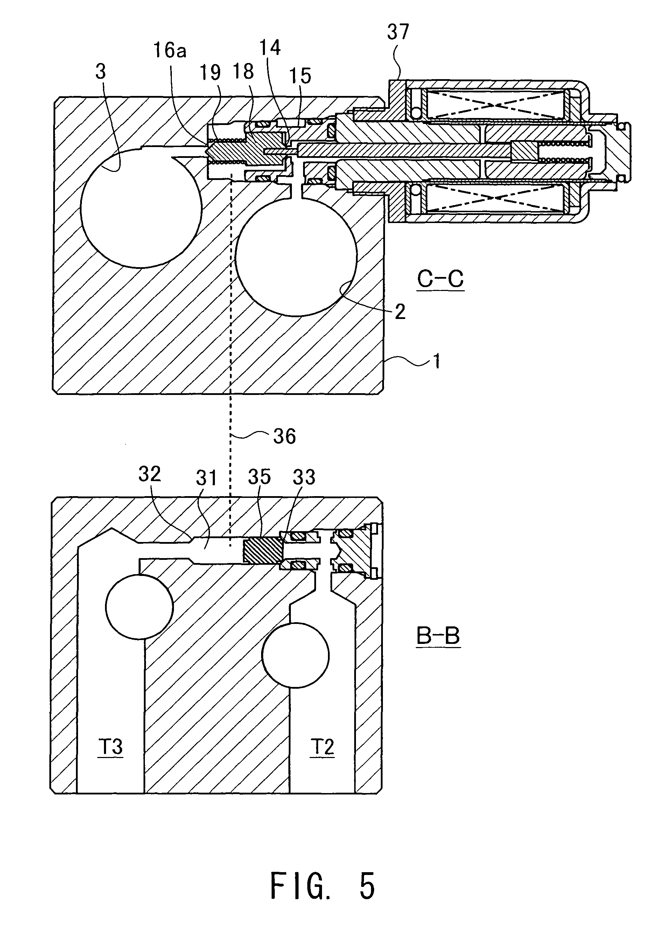

The three-way switching valve of Figs 4, 5 is of a type in which the solenoid and the pilot valve are inserted in the body 1 from a lateral side to reduce the overall height of the valve. The cylinder bores 2, 3 are closed by caps 20, 20a. The body 1 has a lateral insertion hole for the solenoid and the pilot valve. The plug 15 of the pilot valve is inserted into the insertion hole and has the valve seat 14. Another valve seat 16a is integrally formed with the body 1 and leads into a valve hole communicating with the cylinder bore 3. The pilot valve element 18 and the spring 19 are disposed between the valve seats 14, 16a. The plug 15 is formed such that the valve hole of the valve seat 14 on the solenoid side communicates with the cylinder bore 2. The solenoid is screwed into an inlet of the insertion hole by a connecting member 37 forming part of the magnetic circuit. A space accommodating the pilot valve element 18 communicates with a passage 36 to communicate with a space between valve seats 32, 33 of a check valve.

When the solenoid is OFF, the pressure-regulating chamber 8a above the right-side piston 8 is closed by the pilot valve, and the pressure-regulating chamber 9a above the left-side piston 9 communicates with the check valve for relieving the fluid pressure via the pilot valve and the passage 36 to the low-pressure side. Accordingly, the right-side piston 8 seats the main valve element 6 on the main valve seat 4, while the left-side piston 9 lifts the main valve element 7 from the main valve seat 5. As a result, the main valve between the inlet port T1 and the first outlet port T2 is closed, and the main valve between the inlet port T1 and the second outlet port T3 is opened. In the check valve, the valve element 35 is seated on the valve seat 33 which is located on a side where the pressure is reduced due to closing one main valve by the differential pressure between the first and second outlet ports T2, T3. Thus, the pilot valve and the second outlet port T3 on the downstream side of the open main valve communicate via the check valve.

When the solenoid is ON, the pilot valve inverts the respective pressures in the pressure-regulating chambers 8a, 9a to open the right-side main valve and to close the left-side main valve. This inverts the pressures of the first and second outlet ports T2, T3 in magnitude, so that the check valve closes a side communicating with the second outlet port T3, and applies a pressure reduced by the amount of a pressure loss caused by flow of the fluid through the right-side main valve to the pressure-regulating chamber 8a above the right-side piston 8 integrally formed with the right-side main valve, thereby keeping the right-side main valve open, and the left-side main valve closed.

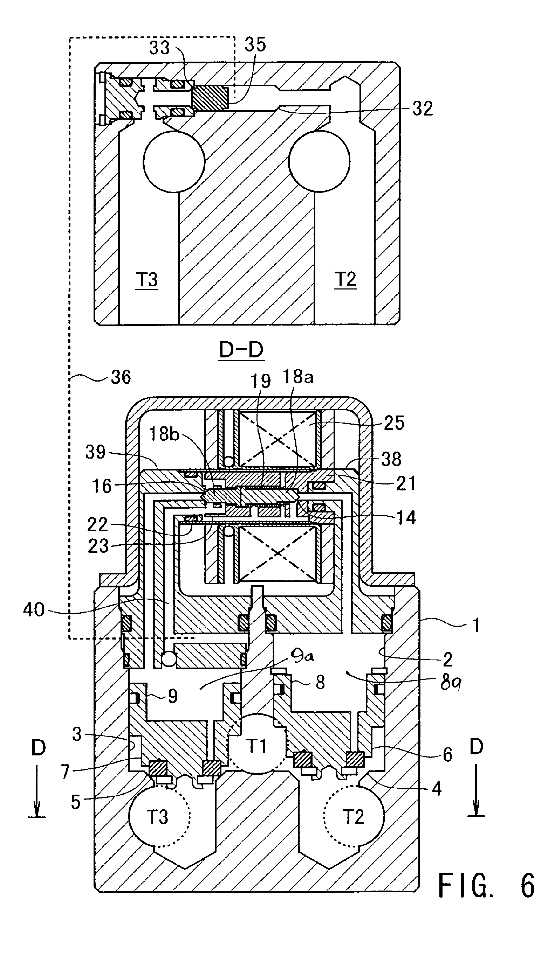

In the three-way switching valve of Fig. 6 the solenoid and the pilot valve are laterally (in lying position) arranged on top of the body 1 in a manner bridging over the two cylinder bores 2, 3. The pilot valve is contained in the solenoid.

The solenoid core 2 is 1 fitted in one end of the sleeve 22, and the plunger 23 inserted into the sleeve 22. The core 21 has an axial valve hole forming the valve seat 14 of the pilot valve. The valve hole communicates via a connecting member 38 with the pressure-regulating chamber 8a above a right-side piston 8. The other end of the sleeve 22 contains one end of a connecting member 39 having a valve hole forming the valve seat 16 of the pilot valve. The other end of the connecting member 39 is fitted in an upper opening of the left-side cylinder bore 3. The connecting member 39 connects the valve hole of the valve seat 16 with the pressure-regulating chamber 9a. Further, the connecting member 39 includes a passage 40 communicating with a space within the sleeve 22 having the plunger 23 loosely fitted therein. The passage 40 communicates via the passage 36 with the check valve.

The plunger 23 has pilot valve elements 18a, 18b arranged along the axis thereof. The pilot valve element 18a has a flange on an opposite side of a needle facing the valve seat 14, and the spring 19 is arranged between the flange and the core 21. The pilot valve element 18b has a flange on an opposite side of a needle facing the valve seat 16. The flange is held in the plunger 23. Therefore, when a solenoid coil 25 is deenergized, the plunger 23 and the pilot valve elements 18a, 18b are urged leftward by the spring 19, whereby the pilot valve causes the pressure-regulating chamber 8a to communicate with the check valve, and closes the pressure-regulating chamber 9a. When the solenoid coil 25 is energized, the plunger 23 is attracted by the core 21 against the urging force of the spring 19, and the pilot valve elements 18a, 18b are urged rightward in a manner interlocked with the attracting operation to close the pressure-regulating chamber 8a and to connect the pressure-regulating chamber 9a to the check valve.

The valve operation is substantially similar to that described for Figs 1, 2 although the left-side and right-side main valves thereof are opened and closed inversely to those of Figs. 1,2.

When the solenoid is OFF, the pressure-regulating chamber 8a communicates with the check valve for relieving via the pilot valve and the passage 36 the fluid pressure to the low-pressure side. The pressure-regulating chamber 9a is closed by the pilot valve. Therefore, the right-side piston 8 moves the main valve element 6 away from the main valve seat 4, while the left-side piston 9 seats the main valve element 7 on the main valve seat 5. As a result, a main valve between the inlet port T1 and the first outlet port T2 is opened, and the main valve between the inlet port T1 and the second outlet port T3 is closed. In the check valve, the valve element 35 is seated on the valve seat 33 on a side where the pressure is reduced by closing of the main valve by a differential pressure between the first and second outlet ports T2, T3. Thus, the pilot valve and the first outlet port T2 on the downstream side of the open main valve communicate via the check valve.

When the solenoid is ON, the pilot valve inverts pressures in the pressure-regulating chambers 8a, 9a to close the right-side main valve and open the left-side main valve. This inverts the pressures of the and second outlet ports T2, T3 in magnitude, so that the check valve closes a side communicating with the first outlet port T2, and applies a pressure reduced by the amount of a pressure loss caused by the flow of the fluid through the left-side main valve to the pressure-regulating chamber 9a to keep the right-side main valve closed, and the left-side main valve open.

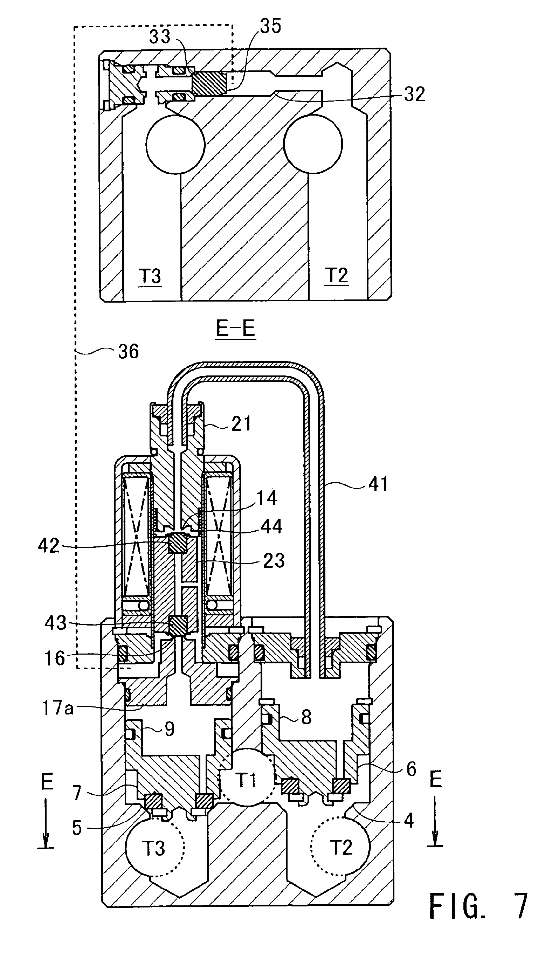

In the three-way switching valve of Fig. 7 the pilot valve and the pressure-regulating chamber 8a are connected by a tube 41. Further, the pilot valve is integrally formed with the solenoid, as in Fig. 6.

The pilot valve includes valve sheets 42, 43 in both end faces of the plunger 23, and the valve seats 14, 16 opposed to the valve sheets 42, 43. The valve seat 14 is integrally formed with the core 21, and the valve hole in the core 21 communicates with the pressure-regulating chamber 8a through the tube 41. The valve seat 16 is integrally formed with a plug 17a disposed above the left-side piston 9, and a valve hole in the plug 17a communicates with the pressure-regulating chamber 9a. A space between the valve seats 14, 16 communicates via the passage 36 with the check valve. Further, the plunger 23 also serving as the pilot valve element, is urged by a spring 44 away from the core 21.

When the solenoid is OFF, the pressure-regulating chamber 8a communicates with the check valve for relieving the fluid pressure via the pilot valve and the passage 36 to the low-pressure side. The pressure-regulating chamber 9a is closed by the pilot valve. Therefore, the piston 8 move the main valve element 6 away from the main valve seat 4, while the piston 9 seats the main valve element 7 on the main valve seat 5. This opens one main valve between the inlet port T1 and the first outlet port T2, and closes the other main valve between the inlet port T1 and the second outlet port T3. In the check valve, the valve element 35 is seated on the valve seat 33 on a side where the pressure is reduced by closing of a main valve by the differential pressure between the first and second outlet ports T2, T3. Thus, the pilot valve and the first outlet port T2 on the downstream side of the open main valve communicate by the check valve.

When the solenoid is ON, the pilot valve inverts pressures in the pressure-regulating chambers 8a, 9a to close the right-side main valve and open the left-side main valve. This inverts the pressures of the first and the second outlet ports T2, T3 in magnitude, so that the check valve closes a side communicating with the first outlet port T2, and applies a pressure reduced by the amount of a pressure loss caused by the flow of the fluid through the left-side main valve to the pressure-regulating chamber 9a to keep the right-side main valve closed, and the left-side main valve open.

Although the seal rings enhancing the sealing performance of the main valves are shown on the main valve elements, they may instead be provided at the main valve seats.

## Claims

1. A pilot-operated three-way switching valve for directing a fluid flow from an inlet port (T1) either into a first outlet port (T2) or a second outlet port (T3),
**characterized in that** a check valve (32, 33, 35) is provided between a pilot valve for carrying out switching operation to cause one of respective pressure-regulating chambers (8a, 9a) for two pistons (8, 9) interlocked with two main valves (4, 6; 5, 7) to communicate with a low-pressure side, and the first outlet port (T2) and the second outlet port (T3) located on downstream sides of the main valves, and that the check valve operates such that the pilot valve and a downstream side of an opened one of the main valves communicate with each other under a differential pressure between a pressure on a pilot valve side and a pressure on a downstream side of a closed one of the main valves.

2. The three-way switching valve according to claim 1, **characterized in that** the check valve (32, 33, 35) includes a passage (31) formed between spaces communicating with the first and second outlet ports (T2, T3), that the valve seats (32, 33) of the check valve are arranged on both end sides of the passage (31), that a plug is disposed as the valve elements (35) of the check valve and is associated to both valve seats (32, 33) inside a chamber defined between the valve seats in the passage, and that the chamber communicates with the pilot valve.

3. A three-way switching valve for directing a fluid flow from an inlet port (T1) either to a first outlet port (T2) or to a second outlet port (T3),
**characterized by**
a first main valve (46) disposed between the inlet port (T1) and the first outlet port (T2), for opening and closing therebetween;
a second main valve (46) disposed between the inlet port (T1) and the second outlet port (T3), for opening and closing therebetween;
a first piston (8) having a larger pressure-receiving area than that of a first main valve element (6) of the first main valve (4, 6), and operating in conjunction with the first main valve element (6) in directions of opening and closing operations of the first main valve element;
a second piston (9) having a larger pressure-receiving area than that of a second main valve element (7) of the second main valve (5, 7), and operating in conjunction with the second main valve element (7) in directions of opening and closing operations of the second main valve element;
a check valve (32, 33, 35) disposed between the first and second outlet ports (T2, T3), for operation such that a passage leading to a downstream side of a closed one of the first and second main valves is closed;
a pilot valve for carrying out switching operation to selectively communicate the check valve with a respective one of two pressure-regulating chambers (8a, 9a) for the first and second pistons (8, 9); and
a solenoid for actuating a pilot valve element (18) of the pilot valve to switch the pilot valve.

4. The three-way switching valve according to claim 3, **characterized in that** the check valve (32, 33, 35) includes a passage (31) formed with valve seats (32, 33) at both end sides between spaces communicating with the first and second outlet ports (T2, T3), that a plug (35) is disposed as valve elements associated with the valve seats (32, 33) in a chamber between the valve seats in the passage, the chamber communicating with the pilot valve, the plug operating such that the passage leading to the downstream side of the closed one of the first and second main valves is closed by a differential pressure between a pressure on a pilot valve side and a pressure on the downstream side of the closed one of the first and second main valves.

5. The three-way switching valve according to claim 3, **characterized in that** the first and second main valves (4, 6; 5,7) have flexible sealing materials (11, 10) at seating portions of either the main valve elements (6, 7) or of the main valve seats (4, 5).

6. The three-way switching valve according to claim 3, **characterized in that** the first and second pistons (8, 9) are integrally formed with the main valve elements (6, 7).

7. The three-way switching valve according to claim 3, **characterized in that** the first and second pistons (8, 9) have respective circumferential piston rings (12, 13) such that a fluid pressure in the inlet port (T1) is introduced into the pressure-regulating chambers (8a, 9a) via the piston rings (12, 13), respectively.

8. The three-way switching valve according to claim 3, **characterized in that** the pilot valve includes a pilot valve element (18) for causing only one of the pressure-regulating chambers (8a, 9a) to communicate with the check valve (32, 33, 35), while closing the other pressure-regulating chamber, and that a spring (19) is provided for urging the pilot valve element (18) toward the solenoid that actuates the pilot valve element (18).

9. The three-way switching valve according to claim 3, **characterized in that** the pilot valve includes a pilot valve element disposed to have both ends (18a, 18b) thereof protruded from both end faces of a plunger (23) of the solenoid, that a first valve seat (14) is formed on an end face of a core (21) of the solenoid in a manner opposed to one end (18a) of the pilot valve element, that the first valve seat (14) leads to a valve hole communicating with the pressure-regulating chamber (8a) for the first piston (8), that second valve seat (16) is disposed opposed to another end (18b) of the pilot valve element and leads to a valve hole communicating with the pressure-regulating chamber (9a) for the second piston (9), and that a passage (36) is provided for connecting spaces bounded by both end faces of the plunger (23) to communicate with the check valve (32, 33, 35).

10. The three-way switching valve according to claim 9, wherein the pilot valve element is a needle having conical both ends (18a, 18b), that the pilot valve element is axially movably disposed along an axis of the plunger (23) in a state where the maximum amount of protrusion toward the second valve seat (16) is restricted, and that the pilot valve element is urged by the spring (19) in a direction away from the first valve seat (14) formed in the core (21).

11. The three-way switching valve according to claim 10, **characterized in that** the needle is divided in two separate needle ends (18a, 18b).

12. The three-way switching valve according to claim 9, **characterized in that** the main valve element (6) of the first main valve (6, 4) and the first piston (8), and the main valve element (7) of the second main valve (5, 7) and the second piston (9) are juxtaposed for parallel forward and backward motion, and that the solenoid is arranged in relation to the pistons (8, 9) such that the plunger (23) moves forward and backward in a direction which is perpendicular to the direction of the motions of the first and second pistons (8, 9).

13. The three-way switching valve according to claim 3, **characterized in that** the pilot valve includes pilot valve elements (42, 43) disposed on both end faces of a plunger (23) of the solenoid, that a first valve seat (14) is formed on an end face of a core (21) of the solenoid opposed to one (42) of the pilot valve elements, the first valve seat (14) leading to a valve hole communicating with the pressure-regulating chamber (8a) for the first piston (8), that a second valve seat (16) is disposed opposed to the other (43) of the pilot valve elements and leads to a valve hole communicating with the pressure-regulating chamber (9a) for the second piston (9), and that a passage (36) connects spaces bounded by both end faces of the plunger (23) with the check valve (32, 33, 35).

14. The three-way switching valve according to claim 13, **characterized in that** the first valve seat (14) or the second valve seat (16) leads to a valve hole communicating with the pressure-regulating chamber (8a or 9a) via a tube (41).
